# EUROPEAN PATENT SPECIFICATION

(11) **EP 1 994 615 B1**
(45) Date of publication and mention of the grant of the patent: **15.10.2014**
(21) Application number: 07713468.2
(22) Date of filing: 23.02.2007
(51) Int. Cl.: H02B 1/052

(54) **SUPPORT DEVICE FOR APPLYING AN ELECTRICAL APPARATUS TO AN APPARATUS-MOUNTING RAIL**
TRAGSCHIENEN-ADAPTER FÜR ELEKTRISCHE GERÄTE
DISPOSITIF DE SUPPORT POUR PLACER UN APPAREIL ÉLECTRIQUE SUR UN RAIL DE MONTAGE D'APPAREIL

(30) Priority: 15.03.2006 IT RM20060145
(43) Date of publication of application: 26.11.2008
(73) Proprietor: BTICINO S.P.A., Viale Borri, 231 21100 Varese (IT)
(72) Inventor: FABRIZI, Fabrizio, I-24100 Bergamo (IT)
(74) Representative: Carangelo, Pierluigi
(86) International application number: PCT/IT2007/000129
(87) International publication number: WO 2007/105242

(56) References cited:
- DE-U1-202004 013 226
- FR-A1- 2 786 619
- US-A1- 2005 006 053

## Description

The present invention relates to the technical field of electrical apparatuses, such as switches and the like, and particularly relates to a support device for applying an electrical apparatus to an apparatus-mounting rail.

A lot of electrical apparatuses, both for use in civil systems and for use in industrial systems, are known to be intended for installation in suitable containment and support structures, which are called electrical switchboards or cabinets. It is known that a typical electrical switchboard consists of a box-like framework defining an inner chamber for housing electrical apparatuses. Generally, this box-like framework comprises walls, or wall portions, that are formed by panels, such as made of sheet metal.

Rails, called the apparatus-mounting rails, that are usually arranged in the vicinity of the switchboard bottom panel are used to mount electrical apparatuses within an electrical switchboard.

To apply an electrical apparatus to an apparatus-mounting rail, a support plate is known to be used, which practically acts as a terminal block, intended to be interposed between the electrical apparatus and the apparatus-mounting rail, and including means for fixing the electrical apparatus to the plate and coupling means for applying the assembly consisting of the electrical apparatus and plate to the apparatus-mounting rail.

In order to apply an electrical apparatus to an apparatus-mounting rail using a support plate in accordance with prior art, screws, bolts or similar fixing means are required to be used. This entails labour- and time-consuming operations, with the operator being forced to operate with both hands when screws and bolts are used, or on the other hand, with an expensive construction of the body or frame of the electrical apparatus, when stud bolts are used, and obviously also entails having screws, bolts, or other small items available, which can be easily lost, and tooling therefor.

US 2005/0006053 discloses a support plate holding an electrical apparatus by a slide and lock mechanism.

An object of the present invention is to provide a support device, which is such as to solve the problems described above with reference to the prior art, and particularly allows facilitating the operations of applying an electrical apparatus to an apparatus-mounting rail by eliminating the use of tools or instruments during this application.

This object is achieved by means of a support device such as defined and characterized in the annexed claim 1 in the broadest embodiment thereof and in the dependent claims in several particular embodiments.

The object of the present invention is also a set of parts such as defined in the annexed claim 10.

The invention will be better understood from the following detailed description of an embodiment thereof, which is given by way of example and thus not to be considered limitative in any way, with reference to the annexed drawings, in which:
- Fig. 1 shows a support device in accordance with the present invention, an electrical apparatus and an apparatus-mounting rail in a view in which the three above-mentioned pieces are separated from each other;
- Fig. 2 shows a perspective view of a set of parts including the support device and the electrical apparatus in Fig. 1, wherein said parts are not assembled to each other and wherein the front sides of the support device and electrical apparatus can be seen;
- Fig. 3 shows another perspective view of the set of parts in Fig. 2, with non-assembled parts, wherein the rear sides of the support device and electrical apparatus can be seen;
- Fig. 4 shows the set of parts in Fig. 2, in the assembled configuration during the coupling to the apparatus-mounting rail in Fig. 1; and
- Fig. 5 shows the electrical apparatus in Fig. 1 applied by means of the support device in Fig. 1 to the apparatus-mounting rail in Fig. 1.

In the figures, equal or similar elements will be designated with the same numerals.

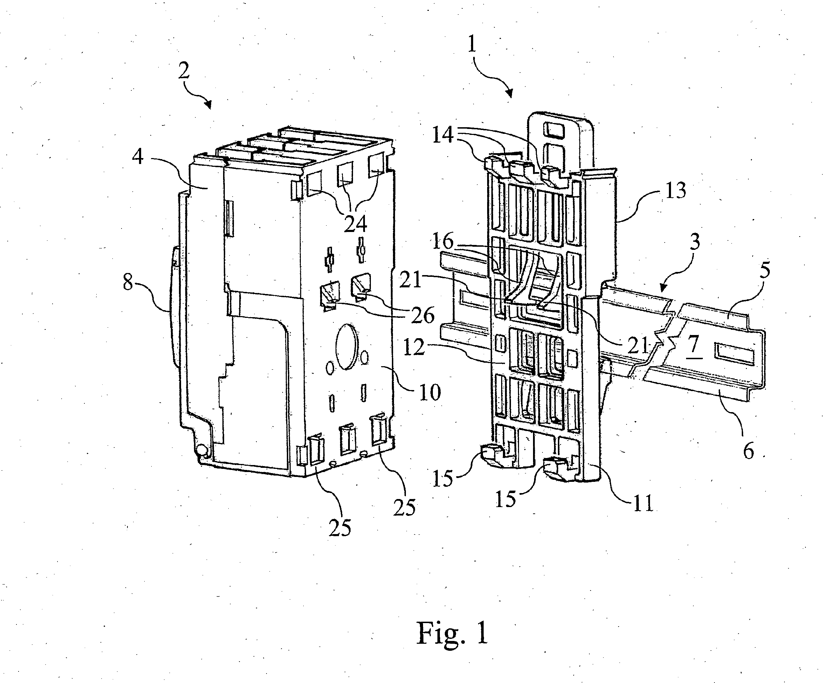

In Fig. 1, a particularly preferred embodiment is shown of a support device 1 in accordance with the present invention, which is shown together with an electrical apparatus 2 and an apparatus-mounting rail 3.

Particularly, in the example in Fig. 1, the electrical apparatus 2 is a modular apparatus that is embodied, in a non-limiting manner, by a switch 2 being commonly called a molded-case switch. A molded-case switch, contrarily to a so-called "open" switch, includes a box-like body made of insulating material, globally designated with 4, which also has a bearing function for the inner mechanisms of switch 2. A molded-case switch is generally used in the fields of industrial automation and advanced tertiary services, in order to cutoff currents, such as also having a value to 1500 A.

The switch 2 can be removably applied via the support device 1 to an apparatus-mounting rail 3, such as fixed to a bottom panel of an electrical switchboard (the panel and switchboard are not shown in the figures). The apparatus-mounting rail 3 is, for example, a standard rail, such as a DIN rail, and consists of a metal profiled section having a bottom wall and two opposite side walls defining a channel 7. Each of the two side walls of the apparatus-mounting rail 3 is provided with a respective projecting edge 5, 6, which practically acts as a coupling edge to which the support device 1 can be coupled. Furthermore, the assembly of the two edges 5 and 6 practically forms a guide.

It should be observed that the switch 2 and apparatus-mounting rail 3 as described above are only a particular, non-limiting example of electrical apparatus and apparatus-mounting rail, whereby it should be considered that a support device according to the present invention can be used for connecting electrical apparatuses to respective rails of types other than those specifically described herein.

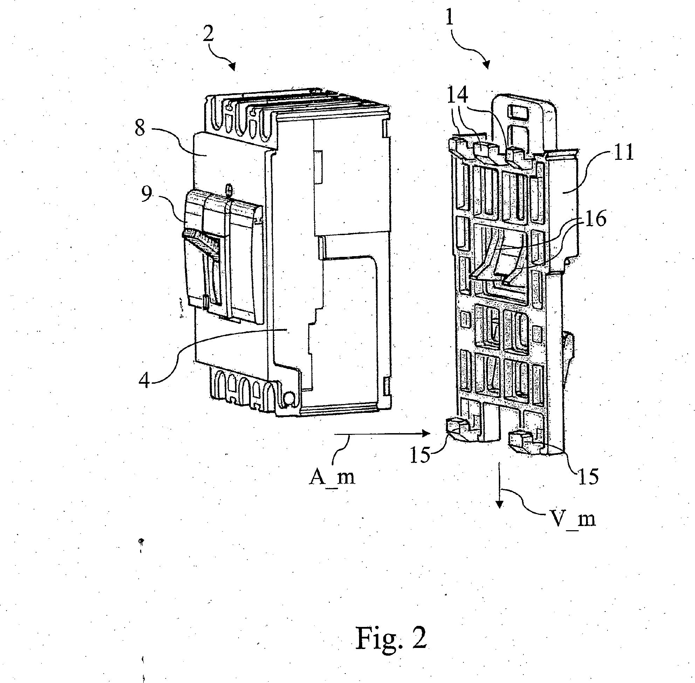

In the example, the box-like body 4 of the switch 2 includes a front side 8, from which a control lever 9 (shown in Fig. 2) protrudes, and a rear side 10 that, when the switch 2 is fixed to the support device 1, faces the latter.

The support device 1 includes a main body 11 having a front side 12 intended to face the switch 2 and a rear side 13 intended to face the apparatus-mounting rail 3. Preferably, as in the example illustrated in the figures, the main body 11 of the support device 1 is essentially plate-like and more preferably is a body having a hollow or lightened structure, practically shaped as a frame having a plurality of lightening holes, either through holes or not.

Preferably, the main body 11 of the support device 1 is made of hard plastics, such as by means of injection moulding.

The support device 1 includes fixing means 14, 15, 16 suitable to co-operate with the switch 2, and particularly with conjugated fixing means 24, 25, 26 that are provided within the switch 2 in order to removably fix the switch 2 to the support device 1.

Advantageously, these fixing means 14, 15, 16 include:
- coupling means 14, 15 suitable to engage the switch 2 following a relative sliding between the switch 2 and the support device 1 to pass from a release position to a coupling position; and
- snap-locking elastic means 16 suitable to operate when said coupling portion has been reached, the snap-locking elastic means 16 being such as to allow the relative sliding between the switch 2 and the support device 1 from the release position to the coupling position and such as to prevent a relative sliding between these pieces after the coupling position has been reached.

Preferably, the coupling means 14, 15 include coupling means that are substantially provided at two opposite ends of the body 11 of the support device 1. In the particularly preferred embodiment as shown in the figures, particularly, the coupling means 14, 15 include upper hooks 14 and lower hooks 15 that protrude from the front side 12 of the main body 11 of the support device 1 and are suitable to co-operate with corresponding conjugated coupling means 24, 25 that are provided within the box-like body 4 of the switch 1. The conjugated coupling means 24, 25 are, in the example herein and in a non-limiting manner, openings 24 that are innerly counter-shaped relative to the upper hooks 14 and provided within the box-like body 4 of switch 2, and cross-beams 25 suitable to be fitted within the lower hooks 15.

With reference to Fig. 2, in the example illustrated herein, starting from a release position to reach the coupling position between the switch 2 and the support device 1, an axial movement (arrow A_m) of the two bodies 4 and 11 towards each other is required to be carried out first, and then the one of the two bodies is required to slide relative to the other in the vertical direction (arrow V_m).

As will be appreciated by those skilled in the art, in an alternative embodiment, the hooks 14, 15 may be provided on the switch 2, whereas complementary coupling means may be provided on the support device 1, which are suitable to co-operate with these hooks. In a further embodiment, the hooks 14, 15 may also be distributed between the support device 1 and the switch 2.

Referring back to Fig. 1, in a particularly preferred embodiment, the snap-locking elastic means 16 of the support device 1 preferably occupy an intermediate position between the upper coupling means 14 and the lower coupling means 15. More preferably, these snap-locking elastic means 16 include at least one flexible tooth 16, having an end portion joined to the main body 11 of the support device 1 and a projecting end 21 distal from the main body 11 of the support device 1. Due to the flexibility of tooth 16, this projecting end 21, when the coupling position has been reached between the coupling means 14, 15 and the complementary coupling means 24, 25, is such as to snap within a respective cavity 26 provided within the main body 4 of switch 2, in order to be engaged within this cavity 26 and prevent a further relative sliding between the switch 2 and support device 1.

Particularly, the end 21 of the flexible tooth 16 is such as to counteract the rear side 10 of switch 2 when the switch 2 is axially moving towards the support device 1 and during the relative sliding between them to reach the coupling position. Practically, in this relative sliding, the flexible tooth 16 adopts a backward position relative to the rest condition thereof, thereby accumulating elastic energy, which is released when the switch 2 and support device 1 adopt the coupling position.

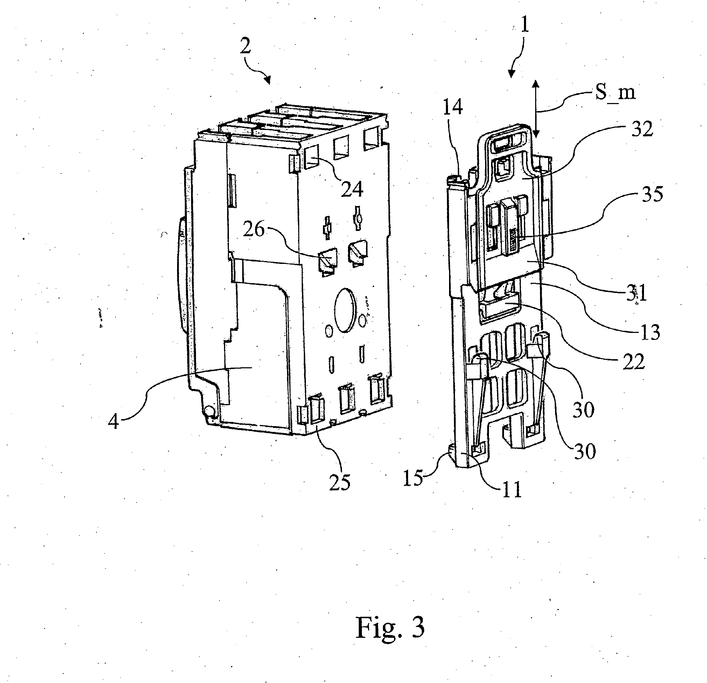

Preferably, as illustrated in the figures, the snap-locking elastic means 16 particularly include a pair of parallel flexible teeth 16 that are joined by a cross-beam 22 (shown in Fig. 3) that can be accessed from the rear side 13 of the support device 1 in order to unlock the flexible teeth 16 from the respective cavities 26, in order to remove the switch 2 from the support device 1.

With reference to Fig. 3, the support device 1 further includes coupling means 30, 31, 32 to allow removably coupling the support device 1 to the apparatus-mounting rail 3.

In the particularly preferred embodiment as shown in the figures, these coupling means 30, 31, 32 include at least two opposite coupling elements 30, 31, of which at least one 30 is stationary relative to the main body 11 of the support device 1 and of which the other 31 is movable relative to the latter. These opposite coupling elements 30, 31 are suitable to co-operate with a respective coupling edge 5, 6 of the apparatus-mounting rail 3, by acting as pincers on these edges 5, 6 such as to couple the support device 1 to the apparatus-mounting rail 3.

In the particular embodiment as illustrated in the figures, which is to be considered as being merely illustrative, the coupling movable element 31 is embodied by a projecting tab 31. In this embodiment, a pair of stationary coupling elements 30 in the form of hooks 30 is further provided.

Preferably, the movable coupling element 31 is integral with an end portion of an auxiliary plate 32 that is slidably and elastically fastened to the main body 11 of the support device 1. The sliding direction and orientations of the auxiliary plate 32 are indicated in Fig. 3 by means of the arrow S_m.

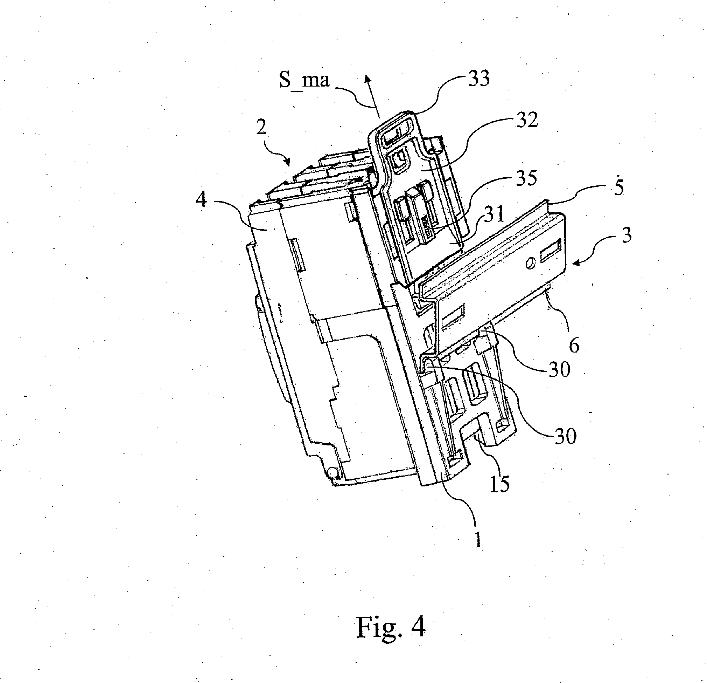

Preferably, the opposite end of the auxiliary plate 32 projects from the main body 11 of the support device 1 such as to provide gripping means 33 to allow an operator to move the movable coupling element 31 (Fig. 4, direction and orientation of arrow S_ma), in contrast with the elastic action of a spring 35, away from the stationary coupling element 30. Thereby, with reference to Fig. 4, the assembled set of parts 1, 2 consisting of the support device 1 and switch 2 can be advantageously coupled to the apparatus-mounting rail 3, without using tools.

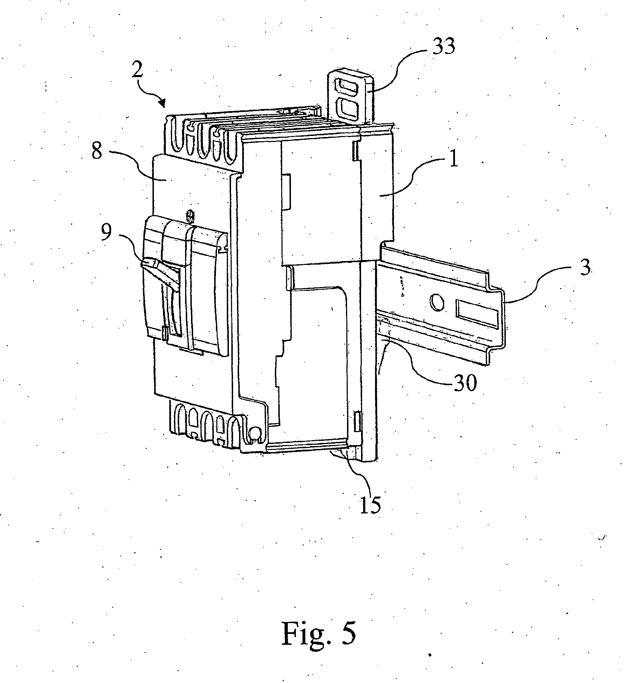

Finally, in Fig. 5, the switch 2 is shown as being applied to the apparatus-mounting rail 3 by means of the support device 1.

In view of what has been described above, it can be thus appreciated how a support device in accordance with the present invention is such as to completely resolve the drawbacks cited above with reference to the prior art, thus allowing an electrical apparatus to be rapidly and easily applied to an apparatus-mounting rail. Advantageously, the operations of removing the electrical apparatus from the apparatus-mounting rail can be also carried out in an entirely manual manner.

Obviously, to the support device described above, those skilled in the art, aiming at satisfying contingent and specific requirements, may carry out a number of modifications and variations, all being however contemplated within the scope of protection of the invention, such as defined in the annexed claims.

## Claims

1. A support device (1) for applying an electrical apparatus (2) to an apparatus-mounting rail (3), the support device (1) including fixing means (14, 15, 16) suitable to co-operate with conjugated fixing means (24, 25, 26) provided within said.electrical apparatus (2) to removably fix said electrical apparatus to the support device (1), said fixing means (14, 15, 16) including:
- coupling means (14, 15) provided at two opposite ends of the support device, the coupling means being suitable to engage said electrical apparatus (2) following a relative sliding, along a sliding direction (V_m), between the electrical apparatus (2) and the support device (1) to pass from a release position to a coupling position;
- snap-locking elastic means (16) suitable to operate when said coupling position has been reached, said elastic means being such as to allow said relative sliding from the release position to the coupling position and such as to prevent said relative sliding when said coupling position has been reached;
the support device being **characterised in that** said snap-locking elastic means (16) occupy an intermediate position, along said sliding direction (V_m), between the coupling means (14, 15).

2. The support device (1) according to claim 1, wherein said snap-locking elastic means (16) include at least one flexible tooth (16) having an end joined to said support device (1) and a projecting end (21) distal to said support device (1), said projecting end (21) being such as to be engaged in said coupling position within a respective cavity (26) that is provided within said electrical apparatus (2).

3. The support device (1) according to claim 2, wherein said at least one flexible tooth (16) is such as to counteract against a wall (10) of said electrical apparatus (2) to adopt a backward position during said sliding and a forward position in said coupling position.

4. The support device (1) according to claims 2 or 3, wherein said at least one flexible tooth (16) includes first and second flexible teeth that are parallel to each other and connected by a cross-beam (22).

5. The support device (1) according to claim 1, wherein said coupling means include at least one hook (14, 16) projecting from said support device (1) and suitable to be engaged with a respective conjugated and counter-shaped coupling means (24, 25) provided within said electrical apparatus (2).

6. The support device (1) according to claim 1, including a substantially plate-like main body (11) suitable to be interposed between said rail (3) and said electrical apparatus (2).

7. The support device (1) according to claim 1, further including coupling means (30, 31, 32) to removably couple said support device to said rail (3).

8. The support device (1) according to claims 6 and 7, wherein said coupling means include at least two opposite coupling elements (30, 31) of which at least one (30) is stationary relative to the main body (11) of the.support device (1), and of which the other (31) is movable relative to the latter.

9. The support device (1) according to claim 8, further including an auxiliary plate (32) that is slidably and elastically fastened to said main body (11), and wherein said movable coupling element (31) is substantially arranged at an end portion of said auxiliary plate (32).

10. A set of parts (1,2) to be applied to an apparatus-mounting rail (3), comprising:
- an electrical apparatus (2);
- a support device (1) for applying said electrical apparatus (2) to said rail (3), according to any preceding claim.

## Patentansprüche

1. Lagereinrichtung (1) zum Vorsehen einer elektrischen Vorrichtung (2) an einer Vorrichtungs-Anbringschiene (3), wobei die Lagereinrichtung (1) ein Befestigungsmittel (14, 15, 16) aufweist, das geeignet ist, mit einem konjugierten Befestigungsmittel (24, 25, 26), welches innerhalb der elektrischen Vorrichtung (2) vorgesehen ist, zusammenzuwirken, um die elektrische Vorrichtung (2) lösbar an der Lagereinrichtung (1) zu befestigen, das Befestigungsmittel (14, 15, 16) mit:
- einem Kopplungsmittel (14, 15), das an zwei gegenüberliegenden Enden der Lagereinrichtung vorgesehen ist, wobei das Kopplungsmittel dazu geeignet ist, mit der elektrischen Vorrichtung (2) im Anschluss an ein relatives Gleiten entlang einer Gleitrichtung (V_m) zwischen der elektrischen Vorrichtung (2) und der Lagereinrichtung (1) in Eingriff zu treten, so dass es von einer Löseposition in eine Kopplungsposition übergeht,
- einem elastischen Schnapparretierungsmittel (16), das dazu geeignet ist, betätigt zu werden, wenn die Kopplungsposition erreicht wurde, wobei das elastische Mittel so ist, dass es das relative Gleiten von der Löseposition zu der Kopplungsposition ermöglicht und dass es das relative Gleiten verhindert, wenn die Kopplungsposition erreicht wurde,
wobei die Lagereinrichtung **dadurch gekennzeichnet ist, dass**
das elastische Schnapparretierungsmittel (16) eine Zwischenposition entlang der Gleitrichtung (V_m) zwischen dem Kopplungsmittel (14, 15) einnimmt.

2. Lagereinrichtung (1) nach Anspruch 1, bei der das elastische Schnapparretierungsmittel (16) wenigstens einen flexiblen Zahn (16) aufweist, bei dem ein Ende mit der Lagereinrichtung (1) verbunden ist und bei dem ein vorstehendes Ende (21) distal zu der Lagereinrichtung (1) ist, wobei das vorstehende Ende (21) so ist, dass es in der Kopplungsposition innerhalb eines jeweiligen Hohlraums (26) im Eingriff ist, der innerhalb der elektrischen Vorrichtung (2) vorgesehen ist.

3. Lagereinrichtung (1) nach Anspruch 2, bei welcher der wenigstens eine flexible Zahn (16) so ausgebildet ist, dass er gegen eine Wand (10) der elektrischen Vorrichtung (2) so wirkt, dass er eine rückwärtige Position während des Gleitens und eine vordere Position in der Kopplungsposition einnimmt.

4. Lagereinrichtung (1) nach Anspruch 2 oder 3, bei welcher der wenigstens eine flexible Zahn (16) erste und zweite flexible Zähne aufweist, die parallel zueinander sind und mit einem Querbalken (22) verbunden sind.

5. Lagereinrichtung (1) nach Anspruch 1, bei der das Kopplungsmittel wenigstens einen Haken (14, 16) aufweist, der von der Lagereinrichtung (1) vorsteht und geeignet ist, mit einem jeweiligen konjugierten und entgegengesetzt geformten Kopplungsmittel (24, 25) in Eingriff zu treten, das innerhalb der elektrischen Vorrichtung (2) vorgesehen ist.

6. Lagereinrichtung (1) nach Anspruch 1, mit einem im Wesentlichen plattenförmigen Hauptkörper (11), der dazu geeignet ist, zwischen die Schiene (3) und die elektrische Vorrichtung (2) eingefügt zu werden.

7. Lagereinrichtung (1) nach Anspruch 1, ferner mit einem Kopplungsmittel (30, 31, 32), um die Lagereinrichtung lösbar mit der Schiene (3) zu koppeln.

8. Lagereinrichtung (1) nach Anspruch 6 und 7, bei welcher das Kopplungsmittel wenigstens zwei gegenüberliegende Kopplungselemente (30, 31) aufweist, von denen wenigstens eines (30) stationär bezüglich des Hauptkörpers (11) der Lagereinrichtung (1) ist, und von denen das andere (31) bezüglich des letzteren beweglich ist.

9. Lagereinrichtung (1) nach Anspruch 8, ferner mit einer Hilfsplatte (32), die gleitbar und elastisch an dem Hauptkörper (11) befestigt ist, und wobei das bewegliche Kopplungselement (31) im Wesentlichen an einem Endabschnitt der Hilfsplatte (32) angeordnet ist.

10. Satz aus Teilen (1, 2), die an einer Vorrichtungs-Anbringschiene (3) vorzusehen sind, mit:
- einer elektrischen Vorrichtung (2),
- einer Lagereinrichtung (1) zum Vorsehen der elektrischen Vorrichtung (2) an der Schiene (3) nach einem der vorhergehenden Ansprüche.

## Revendications

1. Dispositif de support (1) pour appliquer un appareil électrique (2) sur un rail de montage d'appareil (3), le dispositif de support (1) comprenant des moyens de fixation (14, 15, 16) aptes à coopérer avec des moyens de fixation conjugués (24, 25, 26) situés au sein dudit appareil électrique (2) pour fixer, de manière amovible, ledit appareil électrique au dispositif de support (1), lesdits moyens de fixation (14, 15, 16) comprenant :
- des moyens d'accouplement (14, 15) situés aux deux extrémités opposées du dispositif de support, les moyens d'accouplement étant aptes à engager ledit appareil électrique (2) après un glissement relatif, le long d'une direction de glissement (V_m), entre l'appareil électrique (2) et le dispositif de support (1) pour passer d'une position de libération à une position d'accouplement ;
- un moyen élastique de verrouillage par encliquetage (16) apte à fonctionner lorsque ladite position d'accouplement a été atteinte, ledit moyen élastique étant configuré de façon à permettre ledit glissement relatif de la position de libération à la position d'accouplement et à empêcher ledit glissement relatif lorsque ladite position d'accouplement a été atteinte ;
le dispositif de support étant **caractérisé en ce que** ledit moyen élastique de verrouillage par encliquetage (16) occupe une position intermédiaire, le long de ladite direction de glissement (V_m) entre les moyens d'accouplement (14, 15).

2. Dispositif de support (1) selon la revendication 1, dans lequel ledit moyen élastique de verrouillage par encliquetage (16) comprend au moins une dent flexible (16) comportant une extrémité reliée audit dispositif de support (1) et une extrémité en saillie (21) distale par rapport audit dispositif de support (1), ladite extrémité en saillie (21) étant configurée de façon à être engagée dans ladite position d'accouplement au sein d'une cavité (26) respective qui est ménagée au sein dudit appareil électrique (2).

3. Dispositif de support (1) selon la revendication 2, dans lequel ladite au moins une dent flexible (16) est configurée de façon à contrecarrer une paroi (10) dudit appareil électrique (2) afin d'adopter une position arrière au cours dudit glissement et une position avant dans ladite position d'accouplement.

4. Dispositif de support (1) selon la revendication 2 ou 3, dans lequel ladite au moins une dent flexible (16) comprend des première et deuxième dents flexibles qui sont parallèles et reliées par une traverse (22).

5. Dispositif de support (1) selon la revendication 1, dans lequel lesdits moyens d'accouplement comprennent au moins un crochet (14, 16) faisant saillie depuis ledit dispositif de support (1) et apte à être engagé avec un moyen d'accouplement conjugué et de forme complémentaire, respectif (24, 25) situé au sein dudit appareil électrique (2).

6. Dispositif de support (1) selon la revendication 1, comprenant un corps principal sensiblement analogue à une plaque (11) apte à être intercalé entre ledit rail (3) et ledit appareil électrique (2).

7. Dispositif de support (1) selon la revendication 1, comprenant, en outre, des moyens d'accouplement (30, 31, 32) pour accoupler, de manière amovible, ledit dispositif de support audit rail (3).

8. Dispositif de support (1) selon les revendications 6 et 7, dans lequel lesdits moyens d'accouplement comprennent au moins deux éléments d'accouplement (30, 31) opposés, dont au moins un (30) est fixe par rapport au corps principal (11) du dispositif de support (1), et l'autre (31) est mobile par rapport au corps principal (11) du dispositif de support (1).

9. Dispositif de support (1) selon la revendication 8, comprenant, en outre, une plaque auxiliaire (32) qui est fixée élastiquement et en glissement audit corps principal (11), et dans lequel ledit élément d'accouplement mobile (31) est sensiblement agencé au niveau d'une partie d'extrémité de ladite plaque auxiliaire (32).

10. Ensemble de pièces (1, 2) destinées à être appliquées sur un rail de montage d'appareil (3), comprenant :
- un appareil électrique (2) ;
- un dispositif de support (1) pour appliquer ledit appareil électrique (2) sur ledit rail (3), selon l'une quelconque des revendications précédentes.
